# EUROPEAN PATENT SPECIFICATION

(11) **EP 0 540 842 B1**
(45) Date of publication and mention of the grant of the patent: **10.07.1996**
(21) Application number: 92114353.3
(22) Date of filing: 22.08.1992
(51) Int. Cl.: C08L 23/02, C08L 77/00

(54) **Process for HF-welding of articles made of polyolefins, polyamides and compatibilisers**
Verfahren zum Schweissen von aus Polyolefinen, Polyamiden und Haft vermittlern bestehenden Formteilen durch Hochfrequenzschweissung
Procédé pour le soudage d'objets faits de polyoléfines, polyamides et compatibilisants par haute fréquence

(30) Priority: 13.09.1991 AT 1833/91
(43) Date of publication of application: 12.05.1993
(73) Proprietor: PCD-Polymere Gesellschaft m.b.H., A-2323 Schwechat-Mannswörth (AT); Renolit-Werke GmbH, D-67509 Worms (DE)
(72) Inventor: Bernreitner, Klaus, Dipl.-Ing., A-4020 Linz (AT); Wolfsberger, Anton, A-4020 Linz (AT); Stautner, Hans, Dipl.-Ing., W-8090 Reitmehring (DE)
(74) Representative: Kunz, Ekkehard, Dr.

(56) References cited:
- EP-A- 0 261 748
- EP-A- 0 406 568
- WO-A-91/02027
- US-A- 3 336 173

## Description

Die Erfindung betrifft ein Verfahren zum Schweißen von aus Polyolefinen, Polyamiden und Haftvermittlern auf Basis von olefinisch ungesättigten Carbonsäuren oder Carbonsäurederivaten bestehenden Formteilen durch Hochfrequenzschweißung.

Das Schweißen von Kunststofformteilen, vor allem aus Polyvinylchlorid, gelingt besonders vorteilhaft durch Hochfrequenzschweißung. Wie beispielsweise aus US 3,336,173 bekannt ist, können jedoch Polyolefine aufgrund ihres unpolaren Charakters nicht im Hochfrequenzfeld verschweißt werden. Um auch Polyolefine im Hochfrequenzfeld schweißen zu können, werden gemäß US 3,336,173 die Polyolefine mit Polyamiden gemischt. Formteile aus solchen Mischungen sind zwar hochfrequenzschweißbar, sie besitzen jedoch den Nachteil, daß die erhaltenen Schweißnähte nicht ausreichend fest sind bzw. neben der Schweißnaht reißen. Aus der EP-A-406.568 ist bekannt, daß Zähigkeit, Steifigkeit und Wärmeformbeständigkeit von Polyolefin-Polyamid-Formmassen durch Zusatz von olefinisch ungesättigten Carbonsäuren, wie z. B. Maleinsäureanhydrid oder Fumarsäure erhöht werden können. Folien aus Polyolefin-Polyamid-Mischungen besitzen eine sehr schlechte Oberflächenqualität, schlechte mechanische Eigenschaften, sie sind spröde und zeigen große Unterschiede in den in Längs- und Querrichtung gemessenen mechanischen Eigenschaften. Aus der EP-A-188.123 ist bekannt, daß die Stippigkeit und die Opazität von Folien aus Polypropylen und Polyamid durch Zusatz von Haftvermittlern verbessert werden können.

Das Ziel der Erfindung lag darin, Formteile aus Polyolefin-Polyamid-Mischungen mit verbesserter Hochfrequenzschweißbarkeit zu finden. Gemäß Erfindung konnte dies durch Zusatz von Haftvermittlern auf Basis von olefinisch ungesättigten Carbonsäuren oder Carbonsäurederivaten zu Polyolefin-Polyamid-Mischungen erreicht werden.

Gegenstand der Erfindung ist demnach ein Verfahren zum Schweißen von thermoplastischen Formteilen, das dadurch gekennzeichnet ist, daß die Formteile, die im wesentlichen
a) 5 bis 94,5 Gew.% Polyolefine
b) 5 bis 94,5 Gew.% Polyamide
c) 0,5 bis 50 Gew.% Haftvermittler auf Basis von olefinisch
ungesättigten Carbonsäuren oder Carbonsäurederivaten enthalten, im Hochfrequenzfeld miteinander verschweißt werden.

Die Polyolefin-Polyamid-Mischung zur Herstellung der Formteile enthält bevorzugt 10 bis 80 Gew.% Polyolefine, 10 bis 60 Gew.% Polyamide und 5 bis 30 Gew.% Haftvermittler.

Als Haftvermittler auf Basis von olefinisch ungesättigten Carbonsäuren oder Carbonsäurederivaten, können beispielsweise Ethylenmethylacrylat, Ethylenacrylsäure, Ionomere, Ethylenvinylacetat, mit ungesättigten Carbonsäuren oder mit Anhydrid modifizierte Polyolefine, Polyethyloxazoline oder Stearylstearamid, wie sie z. B. in der EP-A-406.568 und EP-A-188.123 beschrieben sind, verwendet werden. Besonders geeignet erweisen sich mit Maleinsäureanhydrid gepfropfte Polypropylene, beispielsweise Admer^{(R)} von Fa. Mitsui Petrochemical, sowie Styrol- und Ethylenbutylen-Blöcke enthaltende, vorzugsweise mit Maleinsäureanhydrid gepfropfte Copolymere, wie sie beispielsweise als Kraton^{(R)} bei Fa. Shell zur Verbesserung der Schlagzähigkeit von Polyamiden kommerziell erhältlich sind.

Als Polyolefine können insbesondere Polyethylene, Polypropylene, Polybutylene, Polymethylpenten, sowie deren Copolymere eingesetzt werden. Auch die Verwendung von Kunststoffen auf Basis von EPDM (Ethylen-Propylen-Dien-Monomere) ist möglich. Als Polyamide kommen insbesondere Polyamid 6 und 66 in Frage. Es ist jedoch auch möglich andere Polyolefine und Polyamide, wie sie beispielsweise in der US 3,336,173 oder EP-A-406.568 beschrieben sind, einzusetzten.
Die Polyolefin-Polyamid-Mischungen zur Herstellung der Formteile können zusätzlich übliche Additive, wie z. B. Füllstoffe, beispielsweise Kreide oder Talkum, Verstärkungsfasern, Verarbeitungshilfsmittel, Pigmente, Stabilisatoren oder Schlagzähigkeitsmodifikatoren enthalten. Als Formteile sind z. B. Folien, Bänder, Platten, Profile oder Rohre zu verstehen.

Das Hochfrequenzschweißen erfolgt nach bekannten Verfahren und mit bekannten Maschinen, wie sie beispielsweise zum Schweißen von PVC verwendet werden. Üblicherweise werden hochfrequente Wechselfelder von etwa 8 bis 200 MHz, bevorzugt im Bereich von etwa 20 bis 50 MHz, angewendet.

An den gemäß den folgenden Beispielen erhaltenen Folien wurden folgende Eigenschaften in Längs- (l) und Quer- (q) richtung gemessen:
- Streckspannung (N/mm²) :: DIN 53455
- Streckdehnung (%) :: DIN 53455
- Durchreißfestigkeit/Elmendorf (N/mm) :: ISO 6383/2
- Zähigkeitsprüfung, Dynatest :: DIN 53373
Fs max (N/mm) - Maximalkraft
W ges (J/mm) - Gesamtarbeit

Die Festigkeit der Schweißnähte wurde durch Messung der Scherfestigkeit gemäß DIN 29971 in Längs- (l) und Quer- (q) richtung:
F max (N) - max. Scherkraft
σB (N/mm²) - Scherspannung
εB (%) - Scherdehnung
sowie durch Messung der Schälfestigkeit gemäß DIN 53289:
Fsₘₐₓ (N) - Schälkraft bestimmt.

In den Beispielen wurden folgende Einsatzstoffe verwendet:
- PP:: Polypropylen - Blockcopolymer, MFI = 5 g/10 min (melt flow index 230°C/2,16 kg) (DAPLEN FFC 2012, PCD Polymere)
- PE:: Very Low Density Polyethylene, MFI = 1 g/10 min (melt flow index 190°C/2,16 kg) /Norsoflex FW 1600, CdF Chimie E.P.)
- EPDM:: Ethylen-Propylen-Dienmonomer-Kunststoff, MFI = 2,7 g/10 min (melt flow index 230°C/5 kg) (Exxelor PA 23, Exxon Chemical)
- PA 6:: Polyamid 6 (Durethan B 30 S, Bayer)
- PA 6.6:: Polyamid 6.6 (Ultramid A 5, BASF)
- Kraton G 1901 X:: Haftvermittler, mit Maleinsäureanhydrid gepfropftes Copolymer aus Styrol- und Ethylenbutylen-Blöcken (Shell)
- Admer QF 500 E:: Haftvermittler, MFI = 3 g/10 min (melt flow index 230°C/2,16 kg), mit Maleinsäureanhydrid gepfropftes Polypropylen (Mitsui Petrochemical)

### Beispiel 1

In einem Trommelmischer wurden 70 Gew.Teile Polypropylen-Copolymer (Daplen^{R} FFC 2012, Fa. PCD Polymere), 20 Gew.Teile Polyamid 6 (Durethan B 30 S, Bayer) und 10 Gew.Teile eines Copolymers aus Styrol- und Ethylenbutylen-Blöcken (Kraton^{R} 1901 X, Shell) als Haftvermittler gemischt und anschließend auf einem Zweischnecken-Kneter bei 236°C aufgeschmolzen, geknetet, extrudiert und granuliert. Aus den Granulaten wurde auf einem Einschneckenextruder bei 260°C eine 0,2 mm dicke Folie extrudiert. Die Folieneigenschaften sind in Tabelle 1 zusammengestellt.
Zwei der erhaltenen Folienblätter wurden anschließend auf einer Hochfrequenzschweißanlage der Type KF 600-G 4000 Sd von Fa. Kiefel bei Raumtemperatur verschweißt.
Folgende Schweißparameter wurden eingestellt:

| | |
|---|---|
| Scheißdruck | 400 bar |
| Schweißzeit | 2,6 sec |
| Anodenstrom | 0,37 A |
| Schweißspannung | 1,6 KV |

Die Eigenschaftswerte der Schweißnähte sind in Tabelle 1 zusammengestellt.

### Vergleichsbeispiel V2

Analog zu Beispiel 1 wurden Folien hergestellt und verschweißt, wobei jedoch kein Haftvermittler verwendet wurde. Die Mengen der Einsatzstoffe und die Eigenschaftswerte sowohl für die Folien, als auch für die Schweißnähte sind in Tabelle 1 zusammengestellt. Sie liegen durchwegs schlechter als die Werte bei Verwendung eines Haftvermittlers und zeigen außerdem im Gegensatz zu den Werten bei der erfindungsgemäßen Verwendung eines Haftvermittlers große Unterschiede in Längs- und Querrichtung. Die Oberflächenqualität der Folien, insbesondere die Gleichmäßigkeit und Rauhigkeit ist schlechter als jene der erfindungsgemäßen Folien.

### Vergleichsbeispiel V3

Analog zu Beispiel V2 wurden Folien ohne Haftvermittler hergestellt und verschweißt, wobei jedoch das nach dem Mischen erhaltene Dry-Blend ohne Kneterbehandlung zu einer Folie extrudiert wurde.
Die Eigenschaftswerte für die Folien und Schweißnähte sind in Tabelle 1 zusammengestellt.

### Beispiele 4 bis 9

Analog zu Beispiel 1 wurden Folien hergestellt und verschweißt, wobei jedoch die in Tabelle 1 angegebenen Einsatzstoffe und Mengen verwendet wurden. Die Beispiele V2 und V3 sind Vergleichsbeispiele, bei denen kein Haftvermittler verwendet wurde.
Die Eigenschaftswerte für die Folien und Schweißnähte sind in Tabelle 1 zusammengestellt.

Aus den Beispielen ist ersichtlich, daß sowohl die Folieneigenschaften als auch die Schweißnahtfestigkeiten bei den erfindungsgemäßen Zusammensetzungen besser und in Längs- und Querrichtung isotroper sind als gemäß den Vergleichsbeispielen. Außerdem zeigt eine optische Beurteilung, daß die Schweißnähte an erfindungsgemäß hergestellten Folien homogen sind, während die Schweißnähte gemäß den Vergleichsbeispielen inhomogen und teilweise unterbrochen sind, sowie Einschlüsse von Luftbläschen zeigen.

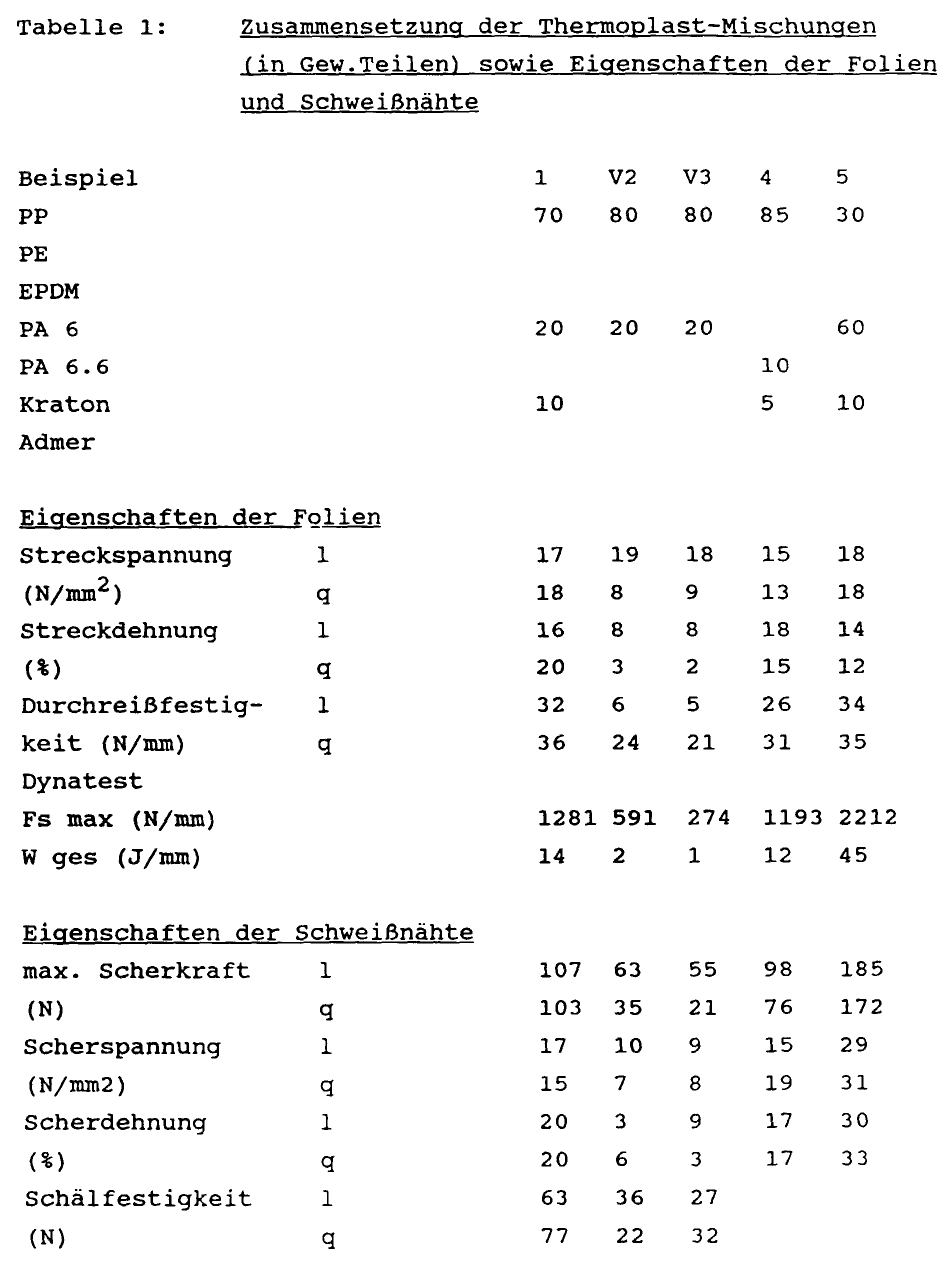

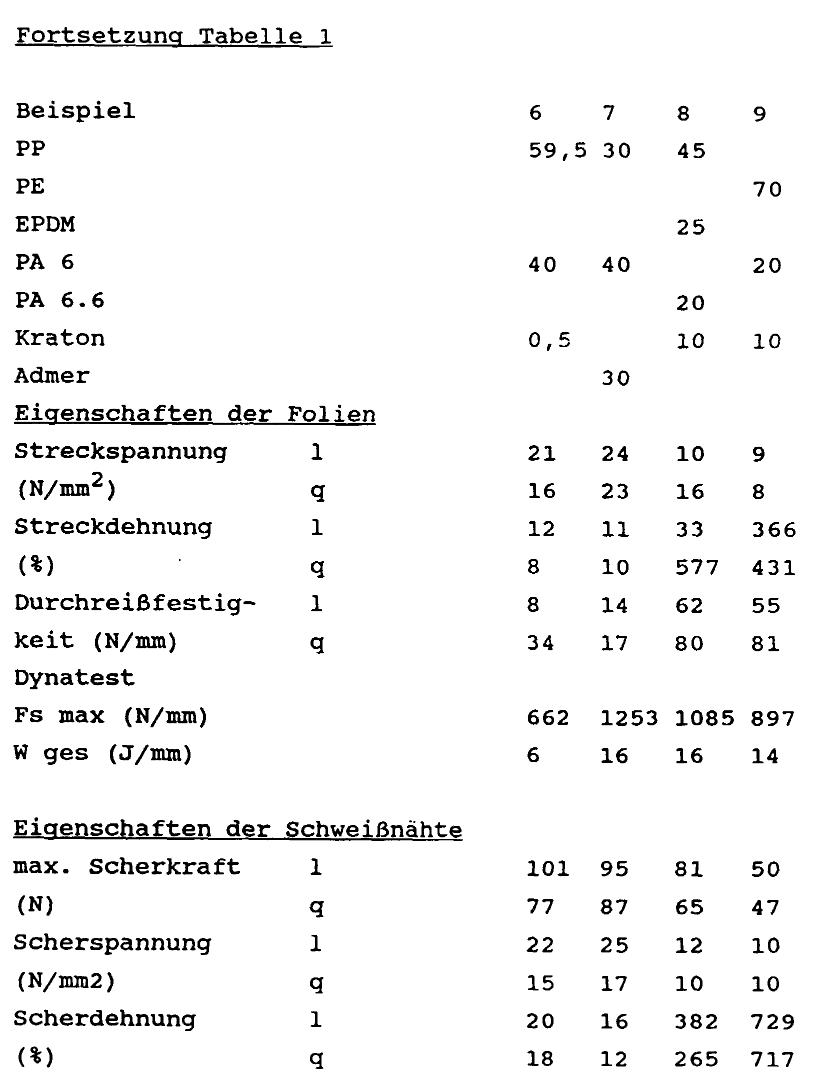

## Claims

1. Process for welding shaped thermoplastic articles, characterized in that the shaped articles, which essentially contain
a) 5 to 94.5% by weight of polyolefins
b) 5 to 94.5% by weight of polyamides
c) 0.5 to 50% by weight of compatibilizers based on olefinically unsaturated carboxylic acids or carboxylic acid derivatives
are welded to one another in a high frequency field.

2. Process for welding shaped articles according to Claim 1, characterized in that the shaped articles essentially contain
a) 10 to 80% by weight of polyolefins
b) 10 to 60% by weight of polyamides
c) 5 to 30% by weight of compatibilizers.

3. Process for welding shaped articles according to Claim 1 or 2, characterized in that compatibilizer is a polypropylene grafted with maleic anhydride.

4. Process for welding shaped articles according to any of Claims 1 to 3, characterized in that the compatibilizer is a copolymer comprising styrene blocks and ethylene-butylene blocks and grafted with maleic anhydride.

## Patentansprüche

1. Verfahren zum Schweißen von thermoplastischen Formteilen, die im wesentlichen
a) 5 bis 94,5 Gew.% Polyolefine
b) 5 bis 94,5 Gew.% Polyamide
c) 0,5 bis 50 Gew.% Haftvermittler auf Basis von olefinisch ungesättigten Carbonsäuren oder Carbonsäurederivaten
enthalten, dadurch gekennzeichnet, daß die Formteile im Hochfrequenzfeld miteinander verschweißt werden.

2. Verfahren zum Schweißen von Formteilen gemäß Anspruch 1, dadurch gekennzeichnet, daß die Formteile im wesentlichen
a) 10 bis 80 Gew.% Polyolefine
b) 10 bis 60 Gew.% Polyamide
c) 5 bis 30 Gew.% Haftvermittler
enthalten.

3. Verfahren zum Schweißen von Formteilen gemäß Anspruch 1 oder 2, dadurch gekennzeichnet, daß der Haftvermittler ein mit Maleinsäureanhydrid gepfropftes Polypropylen ist.

4. Verfahren zum Schweißen von Formteilen gemäß einem der Ansprüche 1 bis 3, dadurch gekennzeichnet, daß der Haftvermittler ein mit Maleinsäureanhydrid gepfropftes Copolymer aus Styrol- und Ethylenbutylen-Blöcken ist.

## Revendications

1. Procédé de soudage d'articles moulés thermo-plastiques qui sont essentiellement formés de :
a) 5 à 94,5 % en poids de polyoléfines,
b) 5 à 94,5 % en poids de polyamides,
c) 0,5 à 50 % en poids d'agents de pontage à base d'acides carboxyliques ou de dérivés d'acides carboxyliques à insaturation oléfinique,
caractérisé en ce que les articles moulés sont soudés ensemble dans un champ de haute fréquence.

2. Procédé de soudage d'articles moulés selon la revendication 1, caractérisé en ce que les articles moulés contiennent essentiellement
a) 10 à 80 % en poids de polyoléfines,
b) 10 à 60 % en poids de polyamides,
c) 5 à 30 % en poids d'agents de pontage.

3. Procédé de soudage d'articles moulés selon la revendication 1 ou 2, caractérisé en ce que l'agent de pontage est un polypropylène greffé avec de l'anhydride maléique.

4. Procédé de soudage d'articles moulés selon l'une des revendications 1 à 3, caractérisé en ce que l'agent de pontage est un copolymère formé de séquences de styrène et d'éthylène-butylène, qui est greffé avec de l'anhydride maléique.
